# EUROPEAN PATENT SPECIFICATION

(11) **EP 0 766 078 B1**
(45) Date of publication and mention of the grant of the patent: **21.06.2000**
(21) Application number: 96114772.5
(22) Date of filing: 16.09.1996
(51) Int. Cl.: G01M 1/02

(54) **Balancing machine, particularly for the balancing of motor vehicle wheels**
Auswuchtmaschine, insbesondere zum Auswuchten von Kraftfahrzeugrädern
Machine d'équilibrage, en particulier pour équilibrer des roues de véhicules à moteur

(30) Priority: 28.09.1995 IT MI951991
(43) Date of publication of application: 02.04.1997
(73) Proprietor: Buzzi, Carlo, 22054 Mandello del Lario (Lecco) (IT)
(72) Inventor: Buzzi, Carlo, 22054 Mandello del Lario (Lecco) (IT)
(74) Representative: Modiano, Guido, Dr.-Ing.

(56) References cited:
- EP-A- 0 212 114
- US-A- 4 352 291
- US-A- 4 404 851
- US-A- 5 067 348

## Description

The present invention relates to a balancing machine, particularly for balancing motor vehicle wheels.

In balancing machines it is conventionally necessary to support the object to be balanced with a supporting structure that is strong enough to allow the system to have a rigidity that is compatible with the measurement process.

In rigid balancing machines in general and in machines for balancing motor vehicle wheels in particular, it is necessary to provide a structure for supporting the rotating system (which is generally constituted by a shaft of the balancing machine that is rotated about its own usually horizontal axis and by the object to be balanced, which is rigidly coupled to said shaft) that is rigid enough to ensure that the resonance frequency of the assembly constituted by the rotating system and the machine is considerably higher than the rotation rate of the rotating system. This condition allows to measure, with appropriate transducers, the centrifugal forces generated by any imbalance that is present in the object to be balanced without the influence of inertial forces produced by the movement of the rotating system; it also allows, according to the prior art of rigid balancing machines, to calibrate the machine by entering, as calibration parameters, the relative distances between the planes where the imbalance can be corrected and its structure.

Furthermore, since the rotating system is normally mounted so as to cantilever out with respect to the supporting structure, said structure must have a weight that is sufficient to counterbalance the weight of the rotating system that cantilevers out with respect to said structure.

In conventional balancing machines, this effect is usually achieved by means of metallic closed supporting structures shaped like a parallelepiped; the shaft meant to support the wheel, or the object to be balanced, and the system of transducers adapted to detect the imbalance forces generated by the rotation of said wheel, are fixed to said structures.

This type of construction of balancing machines has the drawback that it is relatively expensive, since the metal plate requires a good surface finish and accurate painting. Balancing machines produced with this method furthermore have a shape that is aesthetically unpleasant.

Furthermore, in these machines the cost of the raw material considerably affects the overall cost of the machine.

In some machines, the necessary rigidity of the supporting structure has been achieved by producing part of the footing entirely from concrete (see for example the document US-A-4 352 291). This solution has been abandoned due to the difficulty of having an acceptable surface finish of the concrete at a low cost.

A principal aim of the present invention is to solve the above problems by providing a balancing machine, particularly for balancing motor vehicle wheels, that has a sufficiently rigid supporting structure and can be produced with significantly lower production costs than conventional balancing machines.

Within the scope of this aim, an object of the invention is to provide a balancing machine the aesthetics whereof can be significantly more pleasant than conventional balancing machines.

Another object of the invention is to provide a balancing machine the external surface whereof is extremely easy to clean and is free from corrosion risks.

This aim, these objects, and others which will become apparent hereinafter are achieved by a balancing machine, particularly for balancing motor vehicle wheels, comprising a footing that supports a shaft that is rotatable about its own axis and is provided with means for gripping the object to be balanced, characterized in that it comprises a casing which accommodates a supporting structure for said shaft and in that said supporting structure is rigidly connected to said casing by a concrete casting that at least partially occupies the space between said supporting structure and the inside walls of said casing.

Further characteristics and advantages of the invention will become apparent from the following detailed description of a preferred but not exclusive embodiment of the balancing machine according to the invention, illustrated only by way of non-limitative example in the accompanying drawings, wherein:

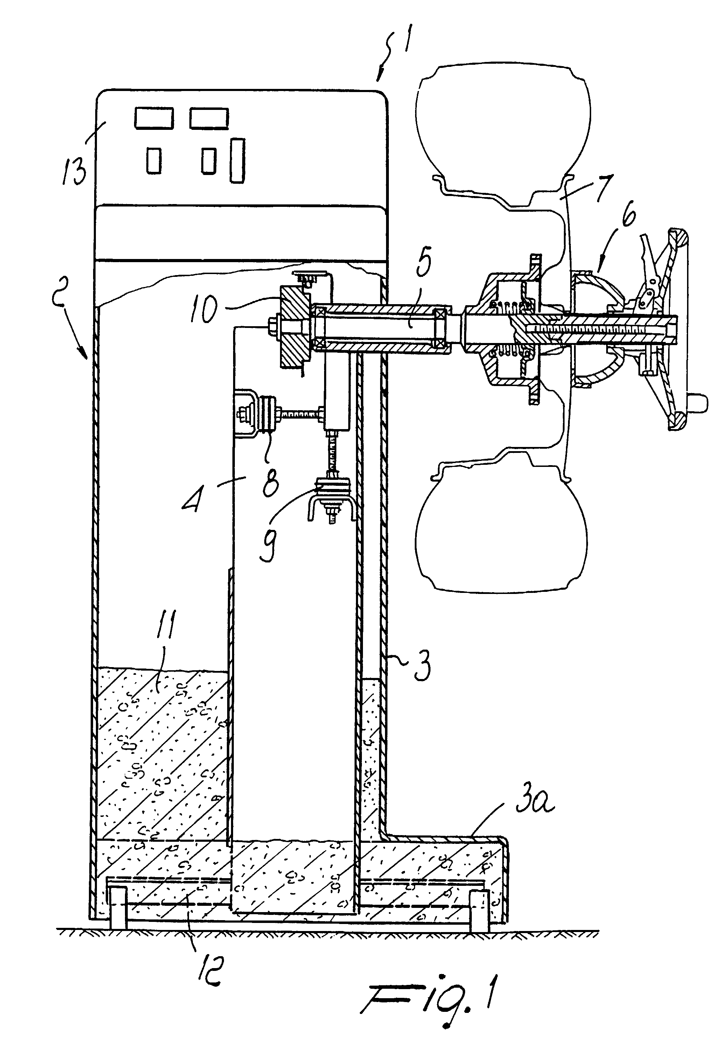

figure 1 is a partially sectional front elevation view of the balancing machine according to the invention;

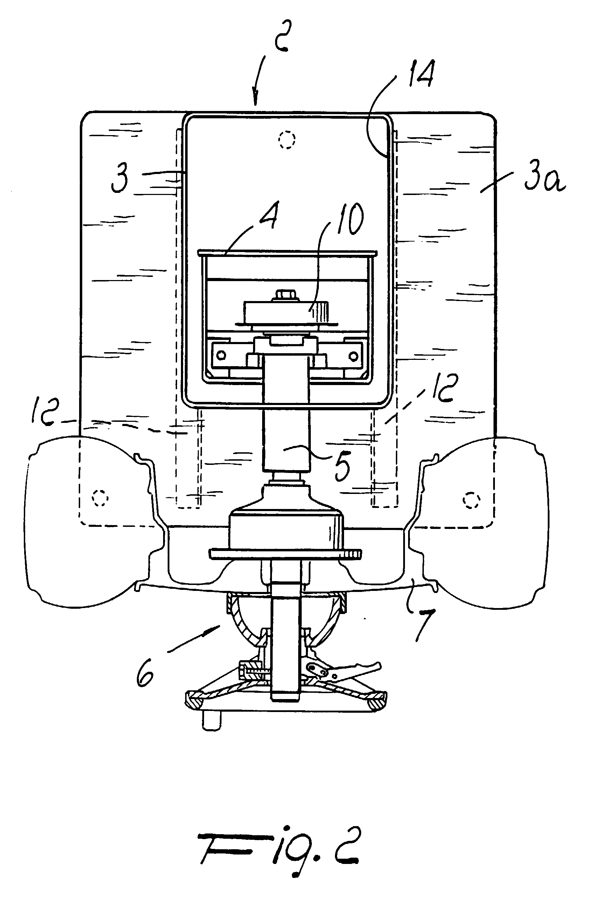

figure 2 is a top plan view of the machine according to the invention, with an upper portion removed for the sake of clarity;

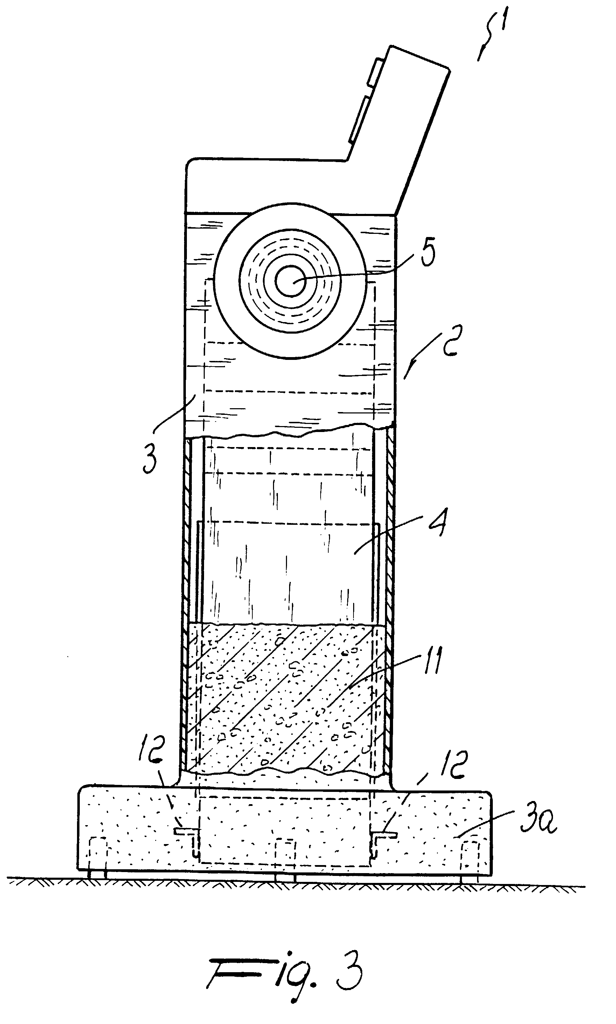

figure 3 is a partially sectional lateral elevation view of the machine according to the invention.

With reference to the above figures, the balancing machine according to the invention, generally designated by the reference numeral 1, comprises a footing 2 substantially constituted by a casing 3 and by a supporting structure 4, which supports, so that it can rotate about its own axis, a shaft 5 that is preferably arranged horizontally and is provided with conventional grip means 6 that can engage the object 7 to be balanced, which in the illustrated case is constituted by the wheel of a motor vehicle.

The supporting structure 4 is accommodated inside the casing 3 and supports, so that it can rotate about its own axis, the shaft 5 in a per se known manner with interposed transducers 8 and 9.

The connection between the shaft 5 and the supporting structure 4, as well as the mounting of the transducers 8 and 9, can be of any kind that is known and applied in the technology of balancing machines. The drawings illustrate, by way of example, the mounting provided in Italian patent no. 1,146,578, of February 19, 1981, in the name of the same Applicant.

A pulley 10 is fixed to the end of the shaft 5 that is accommodated in the footing 2 and is driven by an electric motor, not shown.

The supporting structure 4 is preferably made of metal plate, whereas the casing 3 is preferably made of molded synthetic material.

According to the invention, the supporting structure 4 is rigidly connected to the casing 3 by a concrete casting 11 that at least partially occupies the space between the supporting structure 4 and the inside walls of the casing 3.

The concrete casting 11, in addition to coupling the supporting structure 4 to the casing 3, also gives the necessary rigidity to the entire machine.

The casing 3 can have any shape, with rounded portions, ribs, and protrusions that would be impossible to obtain with conventional sheet metal working. The finish of the synthetic material, for example polyethylene, used to produce the casing 3 and molded for example with a centrifugal molding process, is excellent and durable without necessarily requiring any painting or further finishing operations.

Preferably, the casing 3 is substantially shaped like a parallelepiped, with a base 3a having a wider cross-section and occupied by the concrete casting 11 so as to ensure high stability to the entire balancing machine.

The lower end of the supporting structure 4 is arranged at the base 3a of the casing 3 and is provided with two anchoring bars 12 embedded in the concrete casting 11.

The supporting structure 4 is also preferably shaped substantially like a parallelepiped or a post, optionally with passages and openings on its lateral surface so as to facilitate, proximate to its upper end, the mounting of the elements that support the shaft 5 and, proximate to its lower end, the passage of the concrete casting in order to achieve excellent anchoring of said supporting structure 4 within the concrete casting 11.

The footing 2 is appropriately topped by a console 13 whereon it is possible to arrange the various devices for actuating and controlling the balancing machine.

It should be noted that the shaft 5 might also be rotated about its axis by a conventional manually-driven device, not illustrated for the sake of simplicity, instead of by an electric motor.

In practice, the footing of the balancing machine according to the invention is obtained by separately providing the casing 3, preferably by molding synthetic material, and the supporting structure 4, which is preferably made of structural metal elements.

The supporting structure 4 is assembled to the casing 3 by placing the supporting structure 4 inside the casing 3 in the desired position and by casting a preset amount of concrete 11 inside the casing 3.

The concrete casting can be performed through an upper opening 14 of the casing 3.

In this concrete casting operation, the casing 3 effectively acts as a single-use mould.

In this manner a footing for a balancing machine is obtained that does not require further finishing operations, particularly surface finishing and painting operations, to prevent any corrosion.

Furthermore, the casing 3, and therefore the outer shape of the footing, may be any, i.e., it need not be strictly dependent on the shape of the supporting structure 4, thus allowing to obtain balancing machines with an improved aesthetics with respect to conventional balancing machines, in which the shape of the supporting structure forces the overall shape of the footing.

In practice it has been observed that the balancing machine according to the invention fully achieves the intended aim, since it has the necessary rigidity and can be produced at lower costs than those required by conventional balancing machines.

The invention furthermore allows to obtain balancing machines the aesthetics whereof is improved with respect to conventional balancing machines, and the high level of surface finish of the footing obtainable directly during the molding of the casing makes cleaning particularly easy.

The balancing machine thus conceived, as well as the method for producing it, are susceptible of numerous modifications and variations, all of which are within the scope of the claims.

In practice, the materials employed, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Balancing machine, particularly for balancing motor vehicle wheels, comprising a footing (2) that rotatably supports a shaft (5) that can be rotated about its own axis and is provided with means (6) for gripping the object (7) to be balanced, characterized in that it comprises a casing (3) that accommodates a supporting structure (4) for said shaft (5) and in that said supporting structure (4) is rigidly connected to said casing (3) by a concrete casting (11) that at least partially occupies the space between said supporting structure (4) and the inside walls of said casing (3).

2. Balancing machine according to claim 1, characterized in that said casing (3) is made of molded synthetic material.

3. Balancing machine according to claim 1, characterized in that said casing (3) is substantially shaped like a parallelepiped, with a base (3a) having an increased cross-section, accommodates the lower end of said supporting structure, and is occupied by said concrete casting (11).

4. Balancing machine according to one or more of the preceding claims, characterized in that said supporting structure (4) is connected, proximate to its lower end, to anchoring bars (12) embedded in said concrete casting (11).

5. Balancing machine according to one or more of the preceding claims, characterized in that said footing (2) is topped by an actuation and control console (13).

6. Balancing machine according to one or more of the preceding claims, characterized in that said supporting structure (4) is substantially shaped like a parallelepiped and is accommodated in said casing (3) in a position that is spaced from the inner side walls of said casing (3).

7. Method for producing footings for balancing machines, characterized in that it consists in: forming a casing and a supporting structure for the shaft that supports the object to be balanced; positioning said supporting structure inside said casing; and assembling said supporting structure together with said casing by means of a concrete casting formed in the space between the inner surface of said casing and said supporting structure.

8. Method according to claim 7, characterized in that said casing is obtained by molding synthetic material.

9. Method according to claim 7, characterized in that said supporting structure is made of structural metal elements.

10. Method according to one or more of the preceding claims, characterized in that said casing is produced with a centrifugal molding method.

## Patentansprüche

1. Auswuchtmaschine, insbesondere zum Auswuchten von Kraftfahrzeugrädern, mit einem Untergestell (2), das drehbar eine Welle (5) aufnimmt, die um ihre eigene Achse gedreht werden kann und mit Mitteln (6) zum Halten des auszuwuchtenden Gegenstandes (7) versehen ist, **dadurch gekennzeichnet,** daß sie ein Gehäuse (3) aufweist, das eine Tragkonstruktion (4) für die Welle (5) aufnimmt, und daß die Tragstruktur (4) fest mit dem Gehäuse (3) mittels einer Betongußmasse (11) verbunden ist, die zumindest teilweise den Raum zwischen der Tragkonstruktion (4) und den Innenwandungen des Gehäuses (3) einnimmt.

2. Auswuchtmaschine nach Anspruch 1, **dadurch gekennzeichnet**, daß das Gehäuse (3) aus geformtem synthetischem Material hergestellt ist.

3. Auswuchtmaschine nach Anspruch 1, **dadurch gekennzeichnet**, daß das Gehäuse (3) im wesentlichen wie ein Parallelepiped gestaltet ist, mit einer Basis (3a), die einen vergrößerten Querschnitt besitzt, das untere Ende der Tragkonstruktion aufnimmt und von der Betongußmasse (11) durchsetzt ist.

4. Auswuchtmaschine nach einem oder mehreren der vorstehenden Ansprüche, **dadurch gekennzeichnet,** daß die Tragkonstruktion (4) benachbart zu ihrem unteren Ende mit Verankerungsstäben (12) verbunden ist, die in die Betongußmasse (11) eingebettet sind.

5. Auswuchtmaschine nach einem oder mehreren der vorstehenden Ansprüche, **dadurch gekennzeichnet,** daß das Untergestell (2) oben mit einer Bedienungs- und Überwachungskonsole (13) versehen ist.

6. Auswuchtmaschine nach einem oder mehreren der vorstehenden Ansprüche, **dadurch gekennzeichnet,** daß die Tragkonstruktion (4) im wesentlichen in Art eines Parallelepiped gestaltet ist und vom Gehäuse (3) aufgenommen wird, in einer Position, die beabstandet zu den inneren Seitenwänden des Gehäuses (3) ist.

7. Verfahren zum Herstellen von Untergestellen für Auswuchtmaschine, **dadurch gekennzeichnet,** daß es beinhaltet: Formen eines Gehäuses und einer Tragkonstruktion für die Welle, die den auszuwuchtenden Gegenstand trägt; Positionieren der Tragkonstruktion innerhalb des Gehäuses; und Zusammenbauen der Tragkonstruktion und des Gehäuses mittels einer Betongußmasse, die den Raum zwischen der inneren Oberfläche des Gehäuses und die Tragkonstruktion geformt wird.

8. Verfahren nach Anspruch 7, **dadurch gekennzeichnet,** daß das Gehäuse durch Formen von synthetischem Material erzeugt wird.

9. Verfahren nach Anspruch 7, **dadurch gekennzeichnet,** daß die Tragkonstruktion aus strukturellen Metallelementen geschaffen ist.

10. Verfahren nach einem oder mehreren der vorstehenden Ansprüche, **dadurch gekennzeichnet,** daß das Gehäuse mit einer Formmethode unter Verwendung einer Zentrifuge hergestellt wird.

## Revendications

1. Machine d'équilibrage en particulier pour équilibrer des roues de véhicule à moteur, comprenant une embase (2) qui supporte à rotation un arbre (5) que l'on peut faire tourner autour de son propre axe et qui est muni de moyens (6) pour saisir l'objet (7) à équilibrer, caractérisée en ce qu'elle comporte un boîtier (3) qui loge une structure de support (4) pour ledit arbre (5) et dans lequel ladite structure de support (4) est rigidement reliée audit boîtier (3) par un moulage en béton (11) qui occupe au moins partiellement l'espace entre ladite structure de support (4) et les parois intérieures dudit boîtier (3).

2. Machine d'équilibrage selon la revendication 1, caractérisée en ce que ledit boîtier (3) est réalisé en matière synthétique moulée.

3. Machine d'équilibrage selon la revendication 1, caractérisée en ce que ledit boîtier (3) présente sensiblement la forme d'un parallélépipède avec une base (3a) qui présente une section transversale agrandie, loge l'extrémité inférieure de ladite structure de support et est occupé par ledit moulage en béton (11).

4. Machine d'équilibrage selon l'une ou plusieurs des revendications précédentes, caractérisée en ce que ladite structure de support (4) est reliée, à proximité de son extrémité inférieure, à des barres d'ancrage (12) noyées dans ledit moulage en béton (11).

5. Machine d'équilibrage selon l'une ou plusieurs des revendications précédentes, caractérisée en ce que ladite embase (2) est surmontée par une console d'actionnement et de contrôle (13).

6. Machine d'équilibrage selon l'une ou plusieurs des revendications précédentes, caractérisée en ce que ladite structure de support (4) présente sensiblement la forme d'un parallélépipède et est logée dans ledit boîtier (3) dans une position qui est espacée des parois latérales intérieures dudit boîtier (3).

7. Procédé de fabrication d'embases pour des machines d'équilibrage, caractérisé en ce qu'il comporte les étapes consistant : à former un boîtier et une structure de support pour l'arbre qui supporte l'objet à équilibrer ; à positionner ladite structure de support à l'intérieur dudit boîtier ; et à assembler ladite structure de support ensemble avec ledit boîtier au moyen d'un moulage en béton formé dans l'espace entre la surface intérieure dudit boîtier et ladite structure de support.

8. Procédé selon la revendication 7, caractérisé en ce que ledit boîtier est obtenu en moulant de la matière synthétique.

9. Procédé selon la revendication 7, caractérisé en ce que ladite structure de support est constituée d'éléments structurels en métal.

10. Procédé selon l'une ou plusieurs des revendications précédentes, caractérisé en ce que ledit boîtier est fabriqué par un procédé de moulage centrifuge.
